# FASCICULE DE BREVET EUROPEEN

(11) **EP 3 810 492 B1**
(45) Date de publication et mention de la délivrance du brevet: **14.08.2024**
(21) Numéro de dépôt: 19740610.1
(22) Date de dépôt: 21.05.2019
(51) Int. Cl.: B62D 25/08, B60N 2/22, B60R 22/18, B60N 2/36, B60R 22/28

(54) **CAISSE DE VEHICULE AUTOMOBILE, COMPRENANT UN ELEMENT DEFORMABLE DE FIXATION D'UN SUPPORT DE RECEPTION D'UN ENROULEUR D'UNE CEINTURE DE SECURITE**
KRAFTFAHRZEUGKAROSSERIE MIT EINEM VERFORMBAREN ELEMENT ZUR BEFESTIGUNG EINES AUFNAHMETRÄGERS EINES SICHERHEITSGURTAUFROLLERS
MOTOR VEHICLE BODY COMPRISING A DEFORMABLE ELEMENT FOR ATTACHING A RECEIVING SUPPORT OF A SAFETY BELT WINDER

(30) Priorité: 20.06.2018 FR 1855467
(43) Date de publication de la demande: 28.04.2021
(73) Titulaire: Stellantis Auto SAS, 78300 Poissy (FR)
(72) Inventeur: BENANE, Said, 94240 L HAY LES ROSES (FR)
(86) Numéro de dépôt international: PCT/FR2019/051158
(87) Numéro de publication internationale: WO 2019/243680

(56) Documents cités:
- EP-A1- 3 034 363
- WO-A1-2014/049217
- WO-A1-2014/096590

## Description

La présente invention relève du domaine des véhicules automobiles et plus particulièrement des modalités de résistance aux chocs de la caisse du véhicule en cas d'accident. L'invention relève plus spécifiquement des modalités de fixation sur ladite caisse d'un enrouleur d'une ceinture de sécurité.

Les caisses de véhicule automobile sont agencées pour résister aux chocs en cas d'accident afin notamment de protéger les passagers du véhicule. A cet effet, certains éléments de carrosserie composant la caisse sont assemblés entre eux de manière à ce que l'un au moins d'entre eux se déforme selon une cinématique prédéfinie en cas de chocs subis par le véhicule.

Plus spécifiquement, un ensemble d'éléments de carrosserie que comprend la caisse est configuré pour procurer une déformation de l'un au moins d'entre eux afin de protéger les passagers. Une telle configuration dudit ensemble relève des particularités affectées aux différents éléments de carrosserie composant ledit ensemble, notamment au regard de leur nombre, de leur conformation, de leur ancrage individuel dans l'environnement de la caisse et/ou de leur fixation les uns aux autres.

Il en ressort que des efforts de recherche sont à mener pour organiser la configuration d'un tel ensemble d'éléments de carrosserie, dans le cadre des contraintes liées notamment à l'organisation générale du véhicule. De telles contraintes relèvent principalement de l'architecture de la caisse du véhicule, qui détermine la ligne esthétique et/ou l'aérodynamisme du véhicule et qui par suite impose un environnement donné d'implantation dudit ensemble d'éléments de carrosserie sur la caisse. Il est aussi à tenir compte d'autres contraintes, telles que notamment celles liées à la masse du véhicule et/ou aux coûts résultants de sa fabrication qui sont souhaités les plus faibles possibles.

Dans ce contexte, la présente invention s'inscrit dans le cadre d'une protection des passagers en cas de chocs subis par le véhicule lors d'un accident. Classiquement, les passagers sont individuellement protégés en étant maintenus sur leur siège par une ceinture à enrouleur. L'enrouleur est équipé d'un capteur de mise sous tension de la ceinture à un seuil d'effort déterminé. En cas de choc subi par le véhicule, la ceinture est bloquée pour retenir le passager sur le siège.

Pour limiter les efforts alors supportés par le passager via la ceinture, il est connu de monter l'enrouleur sur la caisse via un élément de carrosserie déformable sous l'effet des contraintes qu'il subit lors du choc. Une déformation dudit élément de carrosserie permet alors d'absorber les efforts qu'il subit sous l'effet du choc, et par suite permet de limiter leur répercussion sur l'enrouleur et donc sur le passager via la ceinture.

Par exemple selon le document US9517749 (HONDA MOTOR CO Ltd), l'enrouleur est monté sur un support qui est fixé d'une part sur un volume de la caisse et d'autre part à l'une des extrémités d'un gousset dont l'autre extrémité est fixée sur la caisse. Le gousset comporte au moins une fenêtre pour sa fragilisation qui autorise sa déformation en cas de chocs subis par le véhicule.

Le document WO2014/049217 (PEUGEOT CITROEN AUTOMOBILES SA) décrit un véhicule comprenant un support d'enrouleur de ceinture de sécurité présentant les caractéristiques techniques du préambule de la revendication 1. 11

Compte tenu de ce qui précède, la présente invention a pour objet une caisse de véhicule automobile comprenant au moins un ensemble d'éléments de carrosserie configuré en organe d'ancrage sur la caisse d'un enrouleur d'une ceinture de sécurité équipant un siège du véhicule, et comprenant un élément de carrosserie déformable sous l'effet d'un choc subi par le véhicule.

Les buts visés par l'invention s'inscrivent notamment dans le cadre des difficultés à surmonter qui sont liées au moins aux contraintes précédemment exposées et au moins relatives, individuellement ou en combinaison, à l'architecture du véhicule, à une restriction souhaitée de sa masse et/ou à une limitation recherchée de ses coûts d'obtention et/ou d'implantation sur le véhicule.

L'invention vise notamment à pourvoir la caisse d'un dit ensemble d'éléments de carrosserie dont l'agencement est apte à permettre son implantation sur un véhicule dont l'architecture présente une ligne esthétique selon laquelle la face arrière du véhicule est significativement inclinée par rapport au plan de roulage du véhicule. Un problème posé est qu'une telle ligne esthétique du véhicule ménage un faible espace d'implantation de l'organe d'ancrage de l'enrouleur sur la caisse.

Selon la démarche de recherche menée par l'invention, ledit espace d'implantation de l'organe d'ancrage de l'enrouleur sur la caisse est contenu entre un anneau de renfort et un passage de roue arrière ménagé par une doublure de custode. Il est aussi à tenir compte que ledit espace est susceptible d'être encombré par au moins un renfort de caisse s'étendant entre l'anneau de renfort et la doublure de custode, pour notamment procurer une résistance de la caisse à la torsion en cas de chocs subis par le véhicule.

Pour si besoin préciser le vocabulaire couramment employé dans le domaine automobile, l'anneau de renfort est formé d'un ou de plusieurs composants en ménageant en tout ou partie un ceinturage du pavillon longitudinalement et transversalement au véhicule et/ou un ceinturage d'une ouverture arrière de la caisse ménageant un accès arrière à l'habitacle du véhicule. Par ailleurs, les côtés latéraux de la caisse sont habillés de custodes formées de panneaux. Les custodes sont au besoin équipées d'une ou de plusieurs doublures qui s'étendent vers l'intérieur de la caisse, tel que la doublure de custode ménageant le passage de roue arrière.

Les notions longitudinale, transversale et verticale affectées au véhicule et donc à la caisse, ainsi que par la suite utilisées pour décrire l'ensemble d'éléments de carrosserie faisant l'objet de l'invention, sont des notions relatives typiquement identifiées suivant les directions respectives d'un repère orthonormé.

Le véhicule s'étend longitudinalement d'avant en arrière, le poste de conduite étant disposé à l'avant du véhicule. Le véhicule s'étend transversalement entre ses côtés latéraux droit et gauche, les notions doit et gauche étant des notions relatives considérées par rapport au conducteur installé en station de conduite du véhicule. Le véhicule s'étend verticalement par rapport à son plan de roulage au sol, les notions supérieur et inférieur, ou autres notions apparentées, étant des notions relatives considérées au regard de leur position par rapport au plan de roulage du véhicule.

Dans un tel contexte, un but de l'invention est de procurer un ancrage de l'enrouleur sur la caisse du véhicule en tenant compte notamment, à titre non restrictif, d'une composante d'effort qu'il est amener à supporter en cas de chocs auxquels est soumis le véhicule, ladite composante d'effort étant essentiellement orientée suivant la direction longitudinale du véhicule.

Un autre but de l'invention est de procurer un tel ancrage via un ensemble d'éléments de carrosserie pouvant être globalement contenu dans un espace restreint. A titre non restrictif, il est notamment visé de pouvoir loger ledit ensemble d'éléments de carrosserie entre un anneau de renfort et une doublure de custode ménageant un passage de roue arrière, sous la contrainte d'une orientation de la face arrière de la caisse qui est significativement inclinée par rapport au plan de roulage de la caisse.

Un autre but de l'invention est de procurer l'ancrage de l'enrouleur sur la caisse via un dit ensemble d'éléments de carrosserie présentant une masse recherchée la plus faible possible et/ou comprenant un nombre limité de composants.

Un autre but de l'invention est de réduire les coûts du véhicule liés à l'obtention et/ou à l'implantation sur le véhicule dudit ensemble d'éléments de carrosserie.

Les buts visés par la présente invention sont atteints isolément ou en combinaison par application des dispositions qui suivent.

Une caisse de véhicule automobile conforme à l'invention comprend au moins un ensemble d'éléments de carrosserie configuré en organe d'ancrage sur la caisse d'un enrouleur d'une ceinture de sécurité. L'ensemble d'éléments de carrosserie comprend un support de réception de l'enrouleur fixé à au moins un élément de carrosserie déformable qui est lui-même fixé sur la caisse et qui est configuré pour se déformer à un seuil d'effort prédéterminé, notamment en cas de choc(s) subi(s) par le véhicule.

Il est compris que classiquement de dits ensembles d'éléments de carrosserie relevant de l'invention sont notamment installés respectivement au côté droit et au côté gauche du véhicule.

Il est aussi compris qu'un ensemble d'éléments de carrosserie relevant de l'invention est susceptible de former un dit organe d'ancrage sur la caisse d'un enrouleur d'une ceinture de sécurité équipant indifféremment soit un siège arrière soit un siège avant en cas d'absence de siège arrière sur le véhicule.
Dans ce contexte, l'invention est reconnaissable en ce que le support est d'une part fixé à une structure d'ancrage sur la caisse d'un dossier de siège du véhicule et d'autre part à au moins un composant d'un renfort de caisse. Le renfort de caisse est interposé entre un anneau de renfort bordant une ouverture arrière de la caisse et une doublure de custode ménageant un passage de roue arrière. Un tel renfort de caisse est notamment configuré pour renforcer la caisse en torsion. Ledit renfort de caisse est constitutif dudit élément de carrosserie déformable en comportant au moins une zone de fragilisation autorisant sa déformation audit seuil d'effort essentiellement suivant un effort de traction orienté suivant l'extension longitudinale de la caisse. Le support est fixé par boulonnage sur le renfort de caisse, via un premier boulon traversant conjointement une aile prolongeant le support et un élément de renfort au moins en partie constitutif du renfort de caisse. Une première zone de fragilisation du renfort de caisse comprend un passage du premier boulon à son travers. Au moins ledit passage est déformable via le premier boulon audit seuil d'effort sous l'effet d'une traction exercée par le support sur le renfort de caisse par suite d'un déplacement de la structure d'ancrage.

Le renfort de caisse est notamment configuré en organe de renfort de la caisse en torsion en cas de chocs subis par le véhicule, en étant fixé à l'anneau de renfort et à la doublure de custode, notamment par soudage. Autrement dit, le renfort de caisse est agencé en organe de renfort de la caisse qui est typiquement apte à se déformer globalement en torsion lorsqu'il est soumis à des efforts de torsion en cas de chocs subis par le véhicule et donc par la caisse.

Ledit effort de traction est notamment exercé sur le renfort de caisse via le support, en étant orienté suivant l'extension longitudinale de la caisse par suite d'un éventuel déplacement de la structure d'ancrage du dossier du siège vers l'avant de la caisse en cas de choc subi par le véhicule et donc par la caisse. Dans ce cas le renfort de caisse est apte à se déformer via ladite au moins une zone de fragilisation qu'il comporte selon une configuration prédéfinie de déformation en traction suivant la direction longitudinale du véhicule.

Une telle déformation en traction du renfort de caisse permet de limiter la transmission dudit effort de traction aux soudures du renfort de caisse le fixant à la caisse, afin de préserver leur intégrité et donc la qualité de la fixation du renfort de caisse sur l'anneau de renfort et sur le passage de roue. En cas de chocs subis par la caisse, les soudures ainsi préservées permettent de maintenir la faculté du renfort de caisse à se déformer en torsion, tout en procurant une absorption de l'effort de traction généré par suite d'un déplacement de la structure d'ancrage du dossier du siège.

A titre indicatif non restrictif, lesdites soudures du renfort de caisse sont ménagées via des pattes équipant le renfort de caisse qui s'étend sensiblement verticalement et transversalement entre l'anneau de renfort et le passage de roue. Lesdites soudures sont notamment réparties sur le renfort de caisse pour son application respectivement sur l'anneau de renfort et sur le passage de roue suivant des directions sensiblement transversale et verticale d'extension de la caisse.

Il est compris par l'introduction de la notion sensiblement que lesdites orientations transversale, verticale et/ou longitudinale d'extension du renfort de caisse et/ou du support ne sont pas considérées strictement mais essentiellement ou autrement dit de manière approchée selon la configuration de la zone d'implantation de l'ensemble d'éléments de carrosserie sur la caisse.

Il est compris que le renfort de caisse est susceptible de comprendre un ou plusieurs composants formés d'éléments de renfort assemblés entre eux. Ainsi, dans une variante, le renfort de caisse est formé d'un corps monobloc ou d'être formé de plusieurs composants qui sont chacun constitués d'un élément de renfort et qui sont assemblés entre eux, notamment par aboutement suivant la direction verticale de séparation entre l'anneau de renfort et la doublure de custode. En autre variante, encore et de préférence, un premier élément de renfort du renfort de caisse est formé par l'aile prolongeant le support et via laquelle celui-ci est fixé sur un deuxième élément de renfort du renfort de caisse auquel il est abouté.

La fixation par boulonnage entre le support et au moins ledit composant du renfort de caisse favorise la transmission de l'effort de traction depuis le support vers le renfort de caisse, à partir d'une exploitation du premier boulon en tirant ou en d'autres termes en organe résistant à une forte traction. Le premier boulon peut ainsi être exploité en organe de détérioration du bord d'un passage que comporte le renfort de caisse pour sa traversée par le premier boulon. Le passage forme dès lors une dite zone de fragilisation du renfort de caisse, la détérioration de son bord modifiant sa conformation et/ou provoquant à son pourtour un déchirement du renfort de caisse qui entraîne sa déformation et par suite une absorption de l'effort de traction.

Le passage est notamment formé par un orifice ménagé à travers le composant du renfort de caisse auquel le support est fixé. Le boulon est susceptible d'être intégrée à l'aile, par soudage notamment. De préférence, l'aile comporte aussi un orifice de passage du premier boulon à son travers, pour éviter de complexifier sa structure et pour simplifier l'organisation des modalités de déformation du renfort de caisse en torsion.

De préférence, jeu est ménagé entre le premier boulon et ledit passage. Un tel jeu permet d'accroître la faculté de déformation dudit passage par le premier boulon audit seuil d'effort atteint par l'effort de traction, en fonction de l'orientation effective de l'application de l'effort de traction sur le renfort de caisse.

Dans ce contexte il est opportun de renforcer l'aile pour limiter sa fragilisation et/ou sa détérioration sous l'effet de l'effort de traction transmis par le premier boulon au renfort de caisse. A cet effet, des nervures de rigidification sont ménagées sur l'aile en bordure d'un passage qu'elle comporte pour sa traversée par le premier boulon. De telles nervures permettent aussi de contenir la déformation du renfort de caisse par le premier boulon, ce qui permet d'éviter un affaiblissement excessif du renfort de caisse susceptible de porter atteinte à sa résistance en torsion en cas de chocs subis par la caisse.

Ainsi selon une forme de réalisation, des nervures de rigidification sont ménagées sur l'aile de part et d'autre d'un passage à son travers du premier boulon. De telles nervures sont notamment ménagées sur la face de l'aile qui est opposée à sa face de fixation au composant du renfort de caisse.

Selon une forme de réalisation, une deuxième zone de fragilisation du renfort de caisse est formée par au moins une fenêtre ménagée à son travers et autorisant une déformation en flexion du renfort de caisse au dit seuil d'effort en direction de l'effort de traction qui lui est appliqué via le support.

Selon une forme de réalisation, la fenêtre est ménagée sur le renfort de caisse en contrebas de la zone de fixation du support sur le renfort de caisse, et est bordée d'une ceinture contraignant la déformation du renfort de caisse par l'effort de traction à ladite déformation en flexion.

Selon une forme de réalisation, ladite structure d'ancrage est fixée à la caisse au moins par boulonnage via un deuxième boulon qui ménage un axe de basculement de la structure d'ancrage sur la caisse autorisant son déplacement en cas de choc subi par le véhicule.

Le basculement de la structure d'ancrage est notamment provoqué en cas de chocs subis par la caisse, avec pour effet de générer ledit effort de traction sur le support qui est alors transmis au renfort de caisse via le premier boulon, avec pour effet de provoquer sa déformation. Le deuxième boulon est de préférence placé en zone inférieure de la structure d'ancrage pour amplifier l'effort de traction généré dès un seuil de déplacement du dossier de faible amplitude.

Selon une forme de réalisation, le support est incliné par rapport au plan de roulage de la caisse et par rapport au renfort de caisse.

Plus spécifiquement selon une forme de réalisation, le support est incliné vers la partie supérieure de la caisse depuis l'avant vers l'arrière de la caisse selon un premier angle d'inclinaison. Le renfort de caisse est incliné vers la partie supérieure de la caisse depuis l'avant vers l'arrière de la caisse selon un deuxième angle d'inclinaison formé entre le support et le renfort de caisse et considéré depuis le support vers l'anneau de renfort.

De préférence, le premier angle d'inclinaison du support par rapport au plan de roulage de la caisse est compris entre 10° et 40°. Le deuxième angle d'inclinaison entre le support et le renfort de caisse est compris entre 100° et 130°. De telles valeurs d'angle sont notamment à adapter selon l'architecture de la caisse et notamment selon l'espace disponible entre l'anneau de renfort et la doublure de custode.

Selon diverses variantes de réalisation précédemment visées, le support est susceptible d'être participant ou non du renfort de caisse.

Ainsi selon une forme de réalisation, le renfort de caisse est formé d'un corps monobloc dont les extrémités sont respectivement fixées sur l'anneau de renfort et sur la doublure de custode. Le dit composant du renfort de caisse sur lequel est fixé le support via l'aile qui le prolonge, est alors formé dudit corps monobloc.

Ainsi encore selon une autre forme de réalisation, le renfort de caisse comprend au moins un élément de renfort supérieur et un élément de renfort inférieur qui sont fixés l'un à l'autre via l'une première de leurs extrémités. Une deuxième extrémité de l'élément de renfort supérieur est fixée à l'anneau de renfort et une deuxième extrémité de l'élément de renfort inférieur est fixée à la doublure de custode. Les notions inférieur et supérieur sont bien entendu considérées par rapport au plan de roulage de la caisse.

Dans ce cas selon une forme de réalisation, l'élément de renfort supérieur et l'élément de renfort inférieur sont distincts de l'aile prolongeant le support. Le support est alors indifféremment fixé via l'aile à l'élément de renfort supérieur et/ou à l'élément de renfort inférieur.

Dans ce même cas encore selon une autre forme de réalisation, le support peut être avantageusement participant du renfort de caisse.

Plus particulièrement selon cette autre forme de réalisation, un prolongement du support est participant du renfort de caisse dont il forme un premier composant fixé d'une part à l'anneau de renfort et d'autre part en aboutement à un deuxième composant du renfort de caisse lui-même fixé à la doublure de custode. Ledit prolongement du support est notamment formé de l'aile qui est solidaire du support et qui est mise à profit pour former le premier composant du renfort de caisse.

Ainsi selon une forme de réalisation, le renfort de caisse comprend l'aile formant un premier de ses composant fixé à l'anneau de renfort et fixé en aboutement, notamment via le premier boulon, à un deuxième composant du renfort de caisse formé par un élément de renfort qui est lui-même fixé à la doublure de custode. Le nombre de pièces composant l'organe d'ancrage de l'enrouleur sur la caisse est ainsi limité à deux, tout en favorisant la transmission de l'effort de traction depuis le support vers le renfort de caisse et en favorisant la résistance à la torsion du renfort de caisse nonobstant la présence de la fenêtre qui est alors ménagée à travers le deuxième composant du renfort de caisse.

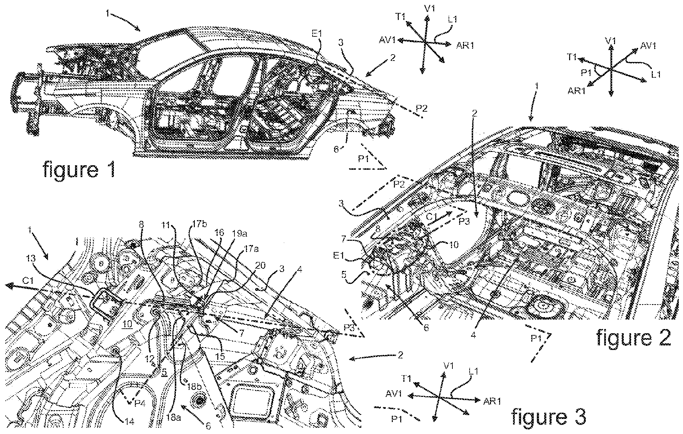

Un exemple de réalisation de la présente invention va être décrit en relation avec les figures des planches annexées, dans lesquelles :
-) les figures 1 et 2 sont des représentations en perspective d'une caisse de véhicule automobile, illustrant pour exemple le contexte général de l'invention.
-) les figures 3 à 5 sont des détails de la caisse représentée sur les figures 1 et 2, illustrant un exemple de réalisation d'un ensemble d'éléments de carrosserie relevant de l'invention et monté sur la caisse.

Les figures et leurs descriptions détaillées exposent l'invention selon des modalités particulières qui ne sont pas restrictives quant à la portée de l'invention telle que définie par les revendications. Les figures et leurs descriptions détaillées d'un exemple de réalisation de l'invention peuvent servir à mieux la définir, si besoin en relation avec la description générale qui vient d'en être faite.

Sur la figure 1 et la figure 2, une caisse 1 de véhicule automobile s'étend longitudinalement L1 d'avant AV1 en arrière AR1, transversalement T1 entre ses côtés droit et gauche et verticalement V1 en élévation depuis son plan de roulage P1. Selon l'exemple d'architecture de la caisse 1 illustré, la face arrière 2 de la caisse 1 s'étend globalement suivant un plan P2 significativement incliné par rapport au plan de roulage P1 de la caisse 1, afin de conférer au véhicule une ligne esthétique spécifique typiquement appréciée comme étant sportive.

La caisse 1 ménage une ossature conférant au véhicule sa robustesse, notamment en cas de chocs violents subis par le véhicule par suite d'un accident. Dans le cadre de l'invention, la caisse 1 comprend notamment un anneau de renfort 3 qui forme une ceinture bordant un accès arrière à l'habitacle du véhicule. Un tel accès est classiquement formé d'une ouverture 4 ménagée à la face arrière 2 de la caisse 1 et prévu pour recevoir une lunette arrière.

L'anneau de renfort 3 est ménagé en prolongement d'une ceinture de renfort de la caisse 1 bordant au moins en partie le pavillon du véhicule. L'anneau de renfort 3 participe ainsi à la résistance de la caisse 1, notamment en torsion, pour protéger les passagers du véhicule en cas de chocs violents.

La caisse 1 est aussi exploitée pour l'ancrage sur le véhicule de divers équipements, dont notamment des sièges (non représentés). Selon l'exemple illustré, l'architecture de la caisse 1 est agencée pour recevoir des passagers avant, dont le conducteur du véhicule, et des passagers arrière. Notamment en ce qui concerne les passagers arrière, ceux-ci sont prévus d'être installés sur un siège arrière couramment agencé en banquette.

Le siège arrière est équipé de ceintures de sécurité pour les passagers, qui sont ancrées sur la caisse 1 à son côté droit et à son côté gauche. De telles ceintures de sécurité sont couramment équipées d'un enrouleur muni d'un capteur de tension pour provoquer leur blocage en cas de chocs subis par le véhicule.

Les enrouleurs sont classiquement ancrés sur la caisse 1 dans des zones situées à l'arrière du siège arrière aux côtés respectivement droit et gauche du véhicule. Il se pose dès lors le problème de l'ancrage de l'enrouleur sur la caisse 1, notamment sous contraintes de l'inclinaison de la face arrière 2 de la caisse 1 et des modalités prévues pour protéger les passagers en cas de chocs subis par le véhicule.

Il est compris que selon l'architecture du véhicule et donc de la caisse 1, l'enrouleur est susceptible d'être installé à l'arrière :
-) soit d'un siège arrière, tel que notamment agencé en baquette, dans le cas où la caisse 1 est configurée pour recevoir des passagers avant et des passagers arrière,
-) soit d'un siège avant dans le cas où la caisse 1 est configurée pour recevoir uniquement des passagers avant.

Plus particulièrement visible sur la figure 2 et en se référant aussi aux figures 3 à 5, l'inclinaison de la face arrière 2 de la caisse 1 limite l'espace E1 pouvant être disponible à l'arrière du siège entre l'anneau de renfort 3 et un passage de roue 5 arrière ménagé par une doublure de custode 6. En outre, un renfort de caisse 7 participant à la résistance de la caisse 1, notamment en torsion, est couramment installé dans ledit espace E1 en interposition entre l'anneau de renfort 3 et le passage de roue 5.

Dans ce contexte sur les figures 3 à 5, l'invention propose d'équiper la caisse 1 d'un ensemble d'éléments de carrosserie configuré en organe d'ancrage sur la caisse 1 d'un enrouleur (non représenté) d'une ceinture de sécurité. L'organe d'ancrage comprend notamment le renfort de caisse 7 et un support 8 de réception de l'enrouleur. Le support 8 est de conformation plane P3 en étant formé d'une plaque sur laquelle l'enrouleur est prévu d'être fixé. Le support 8 s'étend suivant son plan P3 entre le renfort de caisse 7 et une structure d'ancrage 10 du dossier du siège prévu d'être équipé de la ceinture de sécurité.

Le support 8 est fixé d'une part au renfort de caisse 7 via un premier boulon 11 et d'autre part à la structure d'ancrage 10 via un troisième boulon 12. La structure d'ancrage 10 est pourvue d'au moins une gâche 13 via laquelle le dossier du siège est fixé à la structure d'ancrage 10. La structure d'ancrage 10 est montée sur la caisse 1 via au moins un deuxième boulon 14 orienté suivant la direction transversale T1 de la caisse 1.

Le renfort de caisse 7 comprend deux composants, dont l'un est formé d'un élément de renfort 15 agencé en platine et dont l'autre est formé d'une aile 16 prolongeant le support 8 suivant le plan P4 d'extension du renfort de caisse 7. L'aile 16 et l'élément de renfort 15 sont fixés l'un à l'autre via le premier boulon 11 en aboutement l'un de l'autre suivant l'extension du renfort de caisse 7 entre l'anneau de renfort 3 et la doublure de custode 6. Ainsi l'aile 16 d'une part est participante du renfort de caisse 7 en formant l'un de ses composants, et d'autre part forme un organe d'assemblage via le premier boulon 11 entre le support 8 et l'autre composant du renfort de caisse 7 constitué de l'élément de renfort 15.

Le renfort de caisse 7 est fixé par soudage à l'anneau de renfort 3 via l'aile 16 et est fixé à la doublure de custode 6 via l'élément de renfort 15. A cet effet, l'aile 16 comporte des premières pattes de fixation 17a, 17b qui prennent appui contre l'anneau de renfort 3 respectivement et essentiellement verticalement V1 et transversalement T1. L'élément de renfort 15 comporte des deuxièmes pattes de fixation 18a, 18b qui prennent appui contre le passage de roue 5 respectivement et essentiellement verticalement V1 et transversalement T1.

Le renfort de caisse 7 comporte des zones de fragilisation 19a, 19b pour permettre sa déformation en cas de chocs subis par le véhicule par suite d'un déplacement du dossier du siège. Le déplacement du dossier peut notamment résulter de son pivotement autour du deuxième boulon 14 provoquant un basculement du dossier vers l'avant AV1 de la caisse 1.

Il est notamment visé dans ce cas d'éviter une rupture du capteur de tension équipant l'enrouleur, de limiter le déplacement du dossier via la ceinture tout en évitant de blesser les passagers, et/ou surtout d'éviter une rupture du soudage du renfort de caisse 7 sur la caisse 1.

Plus particulièrement en cas de choc provoquant un basculement du siège, le dossier exerce sur le support 8 un effort de traction C1 suivant la direction longitudinale L1 de la caisse 1. Dès lors, un tel effort de traction C1 est transmise au renfort de caisse 7 par le support 8 via le premier boulon 11 formant un tirant essentiellement orienté longitudinalement L1. Le support 8 exerce notamment ledit effort de traction C1 sur le renfort de caisse 7, via le premier boulon 11 qui est essentiellement orienté longitudinalement L1. Les zones de fragilisation 19a, 19b du renfort de caisse 7 autorisent alors sa déformation lorsque l'effort de traction C1 exercé par le support 8 sur le renfort de caisse 7 est supérieur ou égal à un seuil d'effort prédéfini.

Une première zone de fragilisation 19a du renfort de caisse 7 est formée par un passage traversé par le premier boulon 11, qui est ménagé à travers l'élément de renfort 15 dans sa partie supérieure via laquelle le support 8 est fixée à l'élément de renfort 15. Un jeu est de préférence ménagé entre le premier boulon 11 et ledit passage que comporte l'élément de renfort 15.

Par suite de la transmission de l'effort de traction C1 au renfort de caisse 7, le premier boulon 11 provoque une déformation du passage de l'élément de renfort 15 qu'il traverse. Plus particulièrement selon l'exemple illustré, le premier boulon 11 provoque alors au moins une déformation de la partie supérieure de l'élément de renfort 15, notamment par déchirement de l'élément de renfort 15 autour du passage qu'il comporte et/ou par déformation de ce passage. La déformation de la partie supérieure de l'élément de renfort 15 procure une première d'absorption de l'effort de traction C1.

Des nervures 20 sont de préférence ménagées sur l'aile 16 en bordure d'un passage qu'il comporte pour sa traversée par le premier boulon 11, pour conforter sa résistance à l'encontre de sa déformation excessive par suite de l'effort de traction exercée par le support 8 sur l'élément de renfort 15. Les nervures 20 permettent aussi de contenir la déformation de l'élément de renfort 15 dans sa première zone de fragilisation 19a, afin d'éviter un affaiblissement excessif du renfort de caisse 7 en torsion.

Une deuxième zone de fragilisation 19b du renfort de caisse 7 est formée par une fenêtre 21 ménagée à travers le renfort de caisse 7. La fenêtre 21 est ménagée à travers l'élément de renfort 15 en contrebas de sa zone de fixation avec le support 8 et comporte une ceinture 22 à son pourtour.

Le renfort de caisse 7, et plus particulièrement l'élément de renfort 15 et l'aile 16, s'étendent suivant un plan P4 essentiellement vertical/transversal V1/T1 qui est orienté perpendiculairement à l'orientation de l'effort de traction C1 exercé par le support 8 sur l'élément de renfort 15. Le support 8 ménage une assise pour l'enrouleur en s'étendant essentiellement suivant un plan P3 longitudinal/vertical L1 /V1 pour transmettre l'effort de traction C1 à l'élément de renfort 15. En cas de chocs, l'effort de traction C1 transmis à l'élément de renfort 15 via le support 8 provoque son fléchissement dans la deuxième zone de fragilisation 19b suivant le plan P4 de l'élément de renfort 15. Un tel fléchissement de l'élément de renfort 15 limite une fragilisation du renfort de caisse 7 vis-à-vis de sa résistance en torsion par suite de la présence de la ceinture 22 bordant la fenêtre 21.

L'extension essentiellement verticale V1 du renfort de caisse 7 et l'extension essentiellement horizontale du plan P3 du support 8 sont appréciées comme des orientations générales, abstraction faite de leur inclinaison modérée par rapport au plan de roulage P1 de la caisse 1. En effet l'extension longitudinale L1 du support 8 est conditionnée par l'encombrement de l'enrouleur et la distance disponible de séparation entre la structure d'ancrage 10 et le renfort de caisse 7.

L'extension verticale V1 du renfort de caisse 7 est conditionnée par la distance de séparation entre l'anneau de renfort 3 et le passage de roue 5. Compte tenu de l'espace E1 disponible restreint d'implantation du renfort de caisse 7 et du support 8 sur la caisse 1, ceux-ci sont de préférence modérément inclinés par rapport au plan de roulage P1 de la caisse 1 pour permettre un accroissement de leur extension suivant leurs plans P4, P3 respectifs.

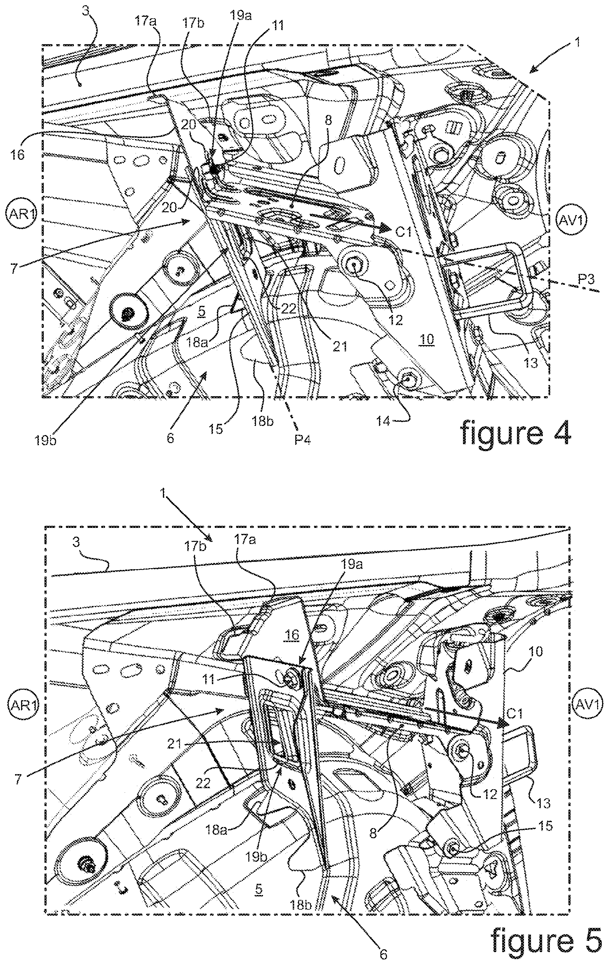

Plus particulièrement visible sur la figure 4, le support 8 et le renfort de caisse 7 sont inclinés par rapport au plan de roulage de la caisse 1 en direction de l'anneau de renfort 3 depuis l'avant AV1 vers l'arrière AR1 de la caisse 1. Le support 8 est incliné par rapport au plan de roulage de la caisse 1 et le renfort de caisse 7 est incliné par rapport au support 8. L'inclinaison du support 8 par rapport au plan de roulage de la caisse 1 est sensiblement équivalente à l'inclinaison relative entre le renfort de caisse 7 et le support 8.

Ceci permet de favoriser une transmission correcte de l'effort de traction C1 depuis le support 8 vers le composant du renfort de caisse 7 formé de l'élément de renfort 15 auquel le support 8 est fixé via l'aile 16. A titre indicatif, l'angle d'inclinaison relative entre le support 8 et le renfort de caisse 7 est compris entre 100° et 130°, et l'angle d'inclinaison du support 8 par rapport au plan de roulage P1 de la caisse 1 est compris entre 10° et 40°. De telles valeurs d'angle procurent un compromis acceptable entre d'une part une optimisation des extensions du renfort de caisse 7 et du support 8 suivant leurs plans P4, P3 respectifs et d'autre part leurs orientations relatives entre eux et par rapport au plan de roulage de la caisse 1. Il est compris que lesdites valeurs d'angle sont notamment à ajuster selon l'architecture de la caisse 1, pour obtenir une transmission satisfaisante de l'effort de traction C1 depuis le support 8 vers le composant 15 du renfort de caisse 7 auquel le support 8 est fixé.

## Revendications

1. Caisse (1) de véhicule automobile comprenant au moins un ensemble d'éléments de carrosserie configuré en organe d'ancrage sur la caisse (1) d'un enrouleur d'une ceinture de sécurité, l'ensemble d'éléments de carrosserie comprenant un support (8) de réception de l'enrouleur fixé à au moins un élément de carrosserie déformable qui est lui-même fixé sur la caisse (1) et qui est configuré en organe déformable à un seuil d'effort prédéterminé, le support (8) étant d'une part fixé à une structure d'ancrage (10) sur la caisse (1) d'un dossier de siège du véhicule et d'autre part à au moins un composant (15) d'un renfort de caisse (7) qui est interposé entre un anneau de renfort (3) bordant une ouverture (4) arrière de la caisse (1) et une doublure de custode (6) ménageant un passage de roue (5) arrière, **caractérisée en ce que en ce que** ledit renfort de caisse (7) est constitutif dudit élément de carrosserie déformable en comportant au moins une zone de fragilisation (19a, 19b) autorisant sa déformation audit seuil d'effort suivant un effort de traction (C1) orienté essentiellement suivant l'extension longitudinale (L1) de la caisse (1), le support (8) étant fixé par boulonnage sur le renfort de caisse (7), via un premier boulon (11) traversant conjointement une aile (16) prolongeant le support (8) et un élément de renfort (15) au moins en partie constitutif du renfort de caisse (7), une première zone de fragilisation (19a) du renfort de caisse (7) comprenant un passage du premier boulon (11) à son travers, au moins ledit passage étant déformable via le premier boulon (11) audit seuil d'effort sous l'effet d'une traction exercée par le support (8) sur le renfort de caisse (7) par suite d'un déplacement de la structure d'ancrage (10).

2. Caisse (1) de véhicule automobile selon la revendication 1, **caractérisée en ce qu'**un jeu est ménagé entre le premier boulon (11) et ledit passage.

3. Caisse (1) de véhicule automobile selon l'une quelconque des revendications 1 et 2, **caractérisée en ce que** des nervures (20) de rigidification sont ménagées sur l'aile (16) de part et d'autre d'un passage à son travers du premier boulon (11).

4. Caisse (1) de véhicule automobile selon l'une quelconque des revendications 1 à 5, **caractérisée en ce qu'**une deuxième zone de fragilisation (19b) du renfort de caisse (7) est formée par au moins une fenêtre (21) ménagée à son travers et autorisant une déformation en flexion du renfort de caisse (7) au dit seuil d'effort en direction de l'effort de traction (C1) qui lui est appliqué via le support (8).

5. Caisse (1) de véhicule automobile selon la revendication 4, **caractérisé en ce que** la fenêtre (21) est ménagée sur le renfort de caisse (7) en contrebas de la zone de fixation du support (8) sur le renfort de caisse (7), et est bordée d'une ceinture (22) contraignant la déformation du renfort de caisse (7) par l'effort de traction (C1) à ladite déformation en flexion.

6. Caisse (1) de véhicule automobile selon l'une quelconque des revendications 1 à 5, **caractérisée en ce que** ladite structure d'ancrage (10) est fixée a la caisse (1) au moins par boulonnage via un deuxième boulon (14) qui ménage un axe de basculement de la structure d'ancrage (10) sur la caisse (1) autorisant son déplacement en cas de choc subi par le véhicule.

7. Caisse (1) de véhicule automobile selon l'une quelconque des revendications 1 à 5, **caractérisée en ce que** le support (8) est incliné par rapport au plan de roulage (P1) de la caisse (1) et par rapport au renfort de caisse (7).

8. Caisse (1) de véhicule automobile selon l'une quelconque des revendications 1 à 7, **caractérisé en ce qu'**un prolongement du support (8) est participant du renfort de caisse (7) dont il forme un premier composant (16) fixé d'une part à l'anneau de renfort (3) et d'autre part en aboutement à un deuxième composant (15) du renfort de caisse (7) lui-même fixé à la doublure de custode (6).

## Patentansprüche

1. Karosserie (1) eines Kraftfahrzeuges mit wenigstens einem Satz von Karosserieteilen, die als Verankerungsorgan an der Karosserie (1) einer Sicherheitsgurtaufrolleinrichtung ausgebildet sind, wobei der Satz von Karosserieteilen einen Aufnahmeträger (8) für die Aufrolleinrichtung aufweist, der an wenigstens einem verformbaren Karosserieteil befestigt ist, das wiederum an der Karosserie (1) befestigt ist und als verformbares Organ bei einer vorbestimmten Kraftschwelle ausgebildet ist, wobei der Träger (8) einerseits an einer Verankerungsstruktur (10) an der Karosserie (1) einer Rückenlehne befestigt ist Fahrzeugsitz und zum anderen mindestens einem Bauteil (15) einer Aufbauverstärkung (7), das zwischen einem Verstärkungsring (3), der eine hintere Öffnung (4) der Aufbauschachtel (1) begrenzt, und einer Custode-Auskleidung (6) angeordnet ist, die einen hinteren Raddurchgang (5) ausbildet, **dadurch gekennzeichnet, dass** die Aufbauverstärkung (7) das verformbare Karosserieteil bildet, indem sie mindestens eine Versprödungszone (19a, 19b) aufweist, die ihre Verformung an der Kraftschwelle gemäß einer im Wesentlichen folgenden gerichteten Zugkraft (C1) gestattet Die Längserstreckung (L1) des Aufbaus (1), wobei der Träger (8) an der Aufbauverstärkung (7) durch einen ersten Bolzen (11) durch einen den Träger (8) verlängernden Flügel (16) und ein die Aufbauverstärkung (7) zumindest teilweise bildendes Verstärkungselement (15) miteinander verschraubt ist, wobei ein erster Versprödungsbereich (19a) der Aufbauverstärkung (7) einen Durchgang des ersten Bolzens (11) durch diesen hindurch aufweist, wobei zumindest der Durchgang über den ersten Bolzen (11) an der Schwelle d verformbar ist Die Kraft unter Einwirkung einer Zugkraft, die der Träger (8) infolge einer Bewegung der Verankerungsstruktur (10) auf die Kastenverstärkung (7) ausübt.

2. Kraftfahrzeug Karosserie (1) nach Anspruch 1, **dadurch gekennzeichnet, dass** zwischen dem ersten Bolzen (11) und dem Durchgang ein Spiel vorgesehen ist.

3. Kraftfahrzeug Karosserie (1) nach einem der Ansprüche 1 und 2, **dadurch gekennzeichnet, dass** auf dem Schenkel (16) beiderseits eines Durchgangs durch seinen ersten Bolzen (11) Versteifungsrippen (20) angeordnet sind.

4. Karosserie (1) für ein Kraftfahrzeug nach einem der Ansprüche 1 bis 5, **dadurch gekennzeichnet, dass** eine zweite Versprödungszone (19b) der Karosserieverstärkung (7) durch wenigstens ein Fenster (21) gebildet ist, das in ihrem Querschnitt angeordnet ist und eine Biegeverformung der Karosserieverstärkung (7) an der Kraftschwelle in Richtung auf die Zugkraft (C1) ermöglicht, die über den Träger (8) auf sie ausgeübt wird.

5. Karosserie (1) eines Kraftfahrzeugs nach Anspruch 4, **dadurch gekennzeichnet, dass** das Fenster (21) an der Karosserieverstärkung (7) unterhalb des Befestigungsbereichs des Trägers (8) an der Karosserieverstärkung (7) ausgebildet ist und von einem Gürtel (22) umgeben ist, der die Verformung der Karosserieverstärkung (7) durch die Zugkraft (C1) auf die Biegeverformung beschränkt.

6. Karosserie (1) eines Kraftfahrzeugs nach einem der Ansprüche 1 bis 5, **dadurch gekennzeichnet, dass** die Verankerungsstruktur (10) an der Karosserie (1) zumindest durch Verschrauben über einen zweiten Bolzen (14) befestigt ist, der eine Schwenkachse der Verankerungsstruktur (10) an der Karosserie (1) ausbildet, die ihre Verlagerung im Falle eines Aufpralls des Fahrzeugs ermöglicht.

7. Karosserie (1) eines Kraftfahrzeugs nach einem der Ansprüche 1 bis 5, **dadurch gekennzeichnet, dass** der Träger (8) in Bezug auf die Rollebene (P1) der Karosserie (1) und in Bezug auf die Karosserieverstärkung (7) geneigt ist.

8. Kraftfahrzeugkarosserie (1) nach einem der Ansprüche 1 bis 7, **dadurch gekennzeichnet, dass** eine Verlängerung des Trägers (8) an der Karosserieverstärkung (7) beteiligt ist, von der sie ein erstes Bauteil (16) bildet, das einerseits am Verstärkungsring (3) und andererseits an einem zweiten Bauteil (15) der Karosserieverstärkung (7) anliegt, das selbst an der Brust-Auskleidung (6) befestigt ist.

## Claims

1. Bodywork (1) of a motor vehicle comprising at least one set of body parts, which are designed as anchorages on the body (1) of a safety-belt retractor, the body parts set having a retractor (8) support, fixed to at least one deformable body part, which is attached to the body (1) and deformed the shape of a solid organ at a predetermined force threshold, the support (8) being fixed to an anchorage structure (10) on the body (1) of a seat back and at least one component (15) of a body reinforcement (7) between an reinforcing ring (3) limiting a rear opening (4) of the body box (1) and a custode lining Cover (6) forming a rear wheel passage (5), marked by the bodywork reinforcement (7) forming the deformable body part by having at least one embrittlement zone (19a, 19b) which allows its deformation at the force threshold according to a substantially following directional tensile force (C1) The longitudinal extension (L1) of the bodywork (1); where the support (8) is bolted to the superstructure reinforcement (7) by a first bolt (11) by a wing extending the support (8) (16) and a reinforcement (7) at least partially forming (15), with a first embrittlement (19a) of the superstructure reinforcement (7) a passage of the first bolt (11) through it, with at least the passage over the first bolt (11) at the threshold d being deformable The force acting on a traction force applied by the beam (8) to the box reinforcement as a result of a movement of the anchorage structure (10) (7).

2. Motor vehicle body (1), as defined in claim 1, marked by the provision of a clearance between the first bolt (11) and the passage.

3. Motor vehicle body (1), in accordance with one of claims 1 and 2, marked by the fact that the leg (16) is placed on both sides of a passage by its first bolt (11), stiffening ribs (20).

4. Bodywork (1) for a motor vehicle as defined in claims 1 to 5, **characterised by** the formation of a second embrittlement zone (19b) of the body reinforcement (7) by at least one window (21), arranged in its cross-section, allowing the bending deformation of the body reinforcement (7) at the force threshold in the direction of the tensile force (C1), which, over the institution (8).

5. Body (1) of a motor vehicle as defined in claim 4, marked by the window (21) on the body reinforcement (7) below the mounting area of the vehicle (8) on the body reinforcement (7), and surrounded by a belt (22), which causes the deformation of the body reinforcement (7) by the tensile force (C1) on the bend deformation limited.

6. Body (1) of a motor vehicle as described in claims 1 to 5, marked by the fact that the anchorage structure (10) is fixed to the body (1) by at least bolting it over a second bolt (14), which forms a swivel axis of the anchorage structure (10) on the body (1), allowing it to be displaced in the event of a vehicle impact.

7. Body (1) of a motor vehicle as defined in claims 1 to 5, marked by the inclination of the vehicle (8) in relation to the roller plane (P1) of the body (1) and in relation to the body reinforcement (7).

8. Motor vehicle body (1), in accordance with one of claims 1 to 7, marked by the fact that an extension of the vehicle (8) is involved in the body reinforcement (7), of which it constitutes a first component (16), which is attached, on the one hand, to the reinforcing ring (3) and, on the other hand, to a second component (15) of the body reinforcement (7), which itself is fixed to the breast lining (6) is.
